# EUROPEAN PATENT APPLICATION

(11) **EP 2 469 903 A1**
(43) Date of publication of application: **27.06.2012**
(21) Application number: 10252187.9
(22) Date of filing: 22.12.2010
(51) Int. Cl.: H04W 12/08, H04L 29/06

(54) **Wireless configuration**

(71) Applicant: British Telecommunications public limited company, London EC1A 7AJ (GB)
(72) Inventor: The designation of the inventor has not yet been filed
(74) Representative: Wästerlid, Gunnel M. C.

(57) **Abstract**

Configuring a wireless device for access to a wireless home network can be a problematic task for many users. The configuration requires knowledge of access parameters, such as SSID and security parameters of the network, and an ability to correctly use these details during the configuration. The present invention provides a method and apparatus for automatically configuring wireless access between a wireless device 116,118 and an access point 110. A Wi-Fi set up service 102 in a core network 100 arranges the set up based on a given telephone number associated with the customer premises 108a-c in which the access point is located. The set up service further gives the owner of the home network the opportunity to grant or deny access to the access point 110 for the wireless device 116,118.

## Description

### Field of the invention

The invention relates to a method of and an apparatus for automatically setting up a wireless device for connection to an access point, in particular an access point of a wireless home network.

### Background of invention

Wireless networks can be provided by residential gateways, or routers, to give access to the internet for various devices in a home. Such networks can operate according to various protocols, with the IEEE 802.11 standard being most common. In order to wirelessly connect to the router or access point, users need to determine the wireless security details of the access point and in some cases, they will need to register the device with the access point.

The security details are for example SSID (Service set identifier) of the access point, and a password and/or an encryption key such as a WEP (Wired Equivalent Privacy) key or WPA (Wi-Fi Protected Access) key. The WEP or WPA keys are used for encrypting the communication between the wireless device and the access point.

One way to register a device with the access point is to store the MAC (Media Access Control) address of the device in a MAC address list at the access point.

Normally a user who wishes to register his device with the home access point has to manually configure the device with the appropriate security details of the access point and if appropriate, also configure the access point with the MAC address of the device. For many people this can be a problematic task with errors not only occurring with wrongly inputted encryption keys, but it is also a time consuming process of determining the correct SSID for the access point, and setting up of access lists. This can cause a lot of frustration for users, and ultimately results in costs for the network provider when the frustrated user finally contacts the help desk for help with the Wi-Fi set up.

### Summary of invention

It is the aim of aspects of the present invention to address one or more of the above stated problems.

Configuring a wireless device for access to a wireless access point can be a problematic task for many users. The configuration requires knowledge of access parameters, such as SSID and security parameters of the network, and an ability to correctly use these details during the configuration.

According to a first aspect of the invention there is provided a method for automatically configuring wireless access between a wireless device and an access point, said method comprising:
receiving an access request at an application server, said access request comprising an identifier associated with the wireless device and a telephone number associated with a location of the access point;
identifying from said telephone number a corresponding connection identifier associated with the access point;
sending a request from the application server to the telephone number requesting permission for said wireless device to access said access point; and if access is granted,
requesting and receiving access parameters from the access point identified by the connection identifier; and
forwarding said access parameters to the wireless device for configuring wireless access to the access point.

By using the core network for configuring a device for Wi-Fi set up several advantages are achieved. First of all the set up procedure is safe since no security information is exchanged in the Wi-Fi domain. Secondly, by giving the owner of a access point the opportunity to grant or deny a Wi-Fi set up, the owner obtains full control over who can access and use the wireless home network. Finally, the set up process is simplified; the wireless device user does not need to deal with access parameters and manually configure the wireless device for Wi-Fi set up; the user only needs to know the telephone number associated with the location of the access point in order to configure the device for Wi-Fi access.

Preferably, the method further comprises the step of the application server receiving a MAC address of the wireless device, and forwarding said MAC address to the access point for storage in an access list.

By automatically storing the MAC address of authorised devices in the access list the security of the wireless network is increased without the owner of the access point having to manually configure the access point.

Preferably, access to the access point is granted only for a limited time, after which the MAC address of the wireless device is deleted from the access list.

This has the advantage that even though a wireless device knows the security details of an access point, it cannot access the wireless network outside this limited time window.

According to a second aspect there is provided an application server for configuring wireless access between a wireless device and an access point, said application server comprising:
a request receiving module for receiving an access request from a wireless device,
said access request comprising an identifier associated with the wireless device and
a telephone number associated with a location of the access point;
an access point finding module for identifying from said telephone number a corresponding connection identifier associated with the access point;
a communications module for sending a request to the telephone number requesting permission for said wireless device to access said access point;
a requesting module for requesting and receiving access parameters from the access point identified by the connection identifier; and
a forwarding module for forwarding said access parameters to the wireless device for configuring wireless access to the access point.

Embodiments of the invention will now be described, by way of example, with reference to the accompanying drawings in which:
Figure 1 shows an overview of a system for implementing the various embodiments of the invention.
Figure 2 is a message chart showing the different steps of a preferred embodiment of the invention.
Figure 3 shows an application server 102 in more detail.

### Description of preferred embodiments

Examples of the present invention provide a method and apparatus for automatically configuring access between a wireless device and a wireless access point. A Wi-Fi set up service in a core network arranges the set up based on a given landline telephone number associated with the customer premises in which the access point is located. The set up service further gives the owner of the home network the opportunity to grant or deny access to the access point for the wireless device.

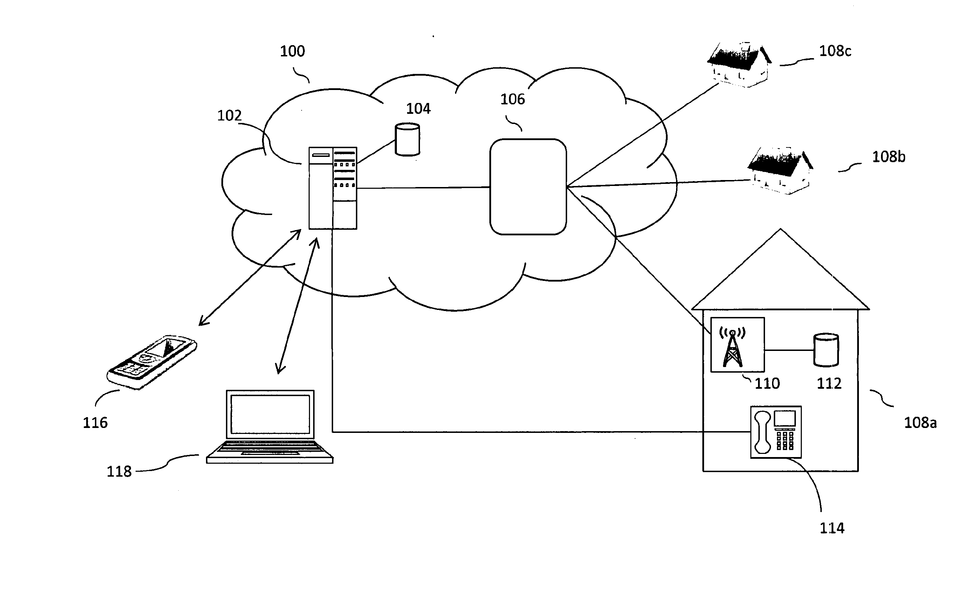

A preferred embodiment of a system for automatically setting up a wireless device, such as a smartphone 116 and laptop 118, for connection to a specific access point 110 is shown in figure 1. The access point 110 and wireless devices operate in accordance with a wireless standard such as the IEEE 802.11 standard, commonly referred to as Wi-Fi, or similar. The system comprises a network 100 having an application server 102 connected to a store 104 as well as an access point management server 106. The access point management server 106 is further connected to a number of customer premises 108a, 108b and 108c. The customer premises 108a comprises an access point 110. The access point 110 provides the customer premises 108a with a network connection, such as an xDSL connection, to the network 100. The xDSL connection has an associated xDSL line identifier, uniquely identifying the xDSL connection. The access point 110 also has local connectivity over wired and wireless connections. The access point 110 has a unique identifier, an SSID (service set identifier). The access point 110 includes a store 112, which is able to store MAC addresses for wireless devices that are allowed to connect to the access point 110.

The customer premises 108a also contains a telephone 114 providing a PSTN connection. The application server 102 and hence network 100 can connect to the telephone 114 over the PSTN connection. Similar components to those found in customer premises 108a can also be found in customer premises 108b and 108c.

The store 104 connected to the application server 102 stores a list of telephone numbers and corresponding xDSL identifier for the access point. The telephone numbers are those associated with the PSTN connections to each of the customer premises 108a, 108b and 108c.

The application server 102 further comprises one or more interfaces for communicating with wireless devices 116, 118. The operation of these interfaces and a preferred embodiment of the invention will be described below.

Whilst application server 102 and access point management server 106 are shown as separate entities, a skilled person will appreciate that the entities could be co-located on a single server.

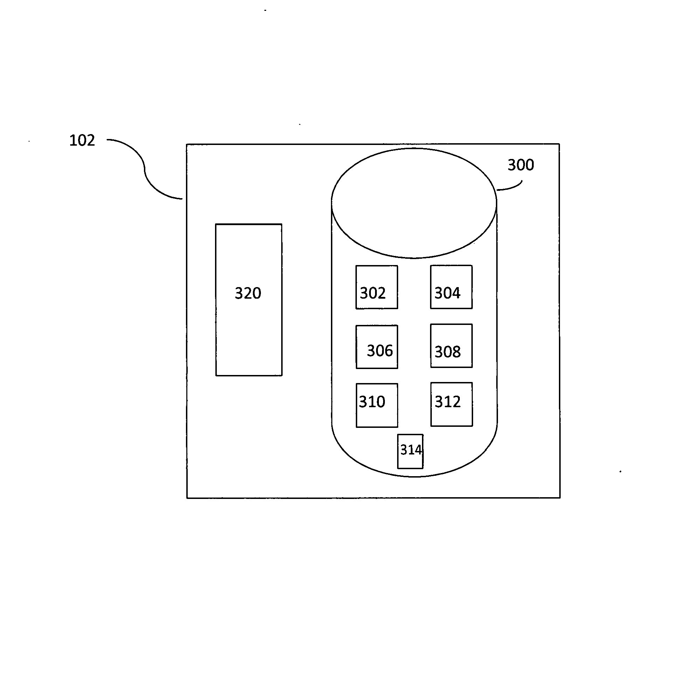

The application server 102 will now be described in relation to figure 3.

The application server 102 comprises a suite of software programs, or modules, stored on a persistent storage device 300, and a processor 320 for executing the executable programme code of the different modules. The modules include the following: a request receiving module 302; an access point finding module 304; a communications module 306; a requesting module 308; a forwarding module 310; and an encryption module 312. The request receiving module 302 receives requests from wireless devices 116, 118 for arranging Wi-Fi set up between the devices and an access point 110 at a specified location 108. The access point finding module 304 identifies access points 110 associated with specified locations 108. The communications module 306 effects communication with a PSTN landline telephone 114. The requesting module 308 requests and receives access parameters from an access point 110. The forwarding module 310 forwards access parameters to the wireless devices. The encryption module 312 encrypts access parameters before sending them to the wireless devices. The application server 102 preferably also comprises a text-to-speech module 314 for transforming a text based reason for requesting wireless access into a voice message that can be sent over a PSTN connection. The operation of this preferred embodiment will be described below.

Wireless devices that wish to use the Wi-Fi set up service, are provided with a Wi-Fi set up application. For example, wireless device 116 can download the application from the network 100 or internet, or from a CD or memory stick, and install the application on the device. Alternatively, the Wi-Fi set up application could be run as an applet/ActiveX control via a web browser on the wireless device.

The access point management server 106 is also configured with new Wi-Fi set up firmware in order to handle the automatic Wi-Fi set up. Installing the new firmware is done according to industry standards such as the TR-069 standard (CPE WAN Management Protocol v1.1), which provides methods for configuring of home access points and access point management servers.

In a first embodiment the application server 102 incorporates components of an interactive voice response (IVR) system. The application server 102 in the network 100 arranges a set up between a wireless device and an access point based on a contact number associated with the location 108a of the access point. The contact number is the PSTN number, or telephone number, of the PSTN connection provided to the same location 108a. For example, a user wishing to gain access to the access point 110 in customer premises 108a, provides the telephone number of the customer premises 108a as the contact number. The transfer of the contact number and other set-up information between the wireless device and the application server 102 can be done using DTMF (Dual-tone multi-frequency) signalling.

Most smartphones have the ability to code and decode DTMF signals. There is a wide level of support for this with APIs available for Linux based mobile devices running Java; Blackberries; iPhones; and Windows based phones.

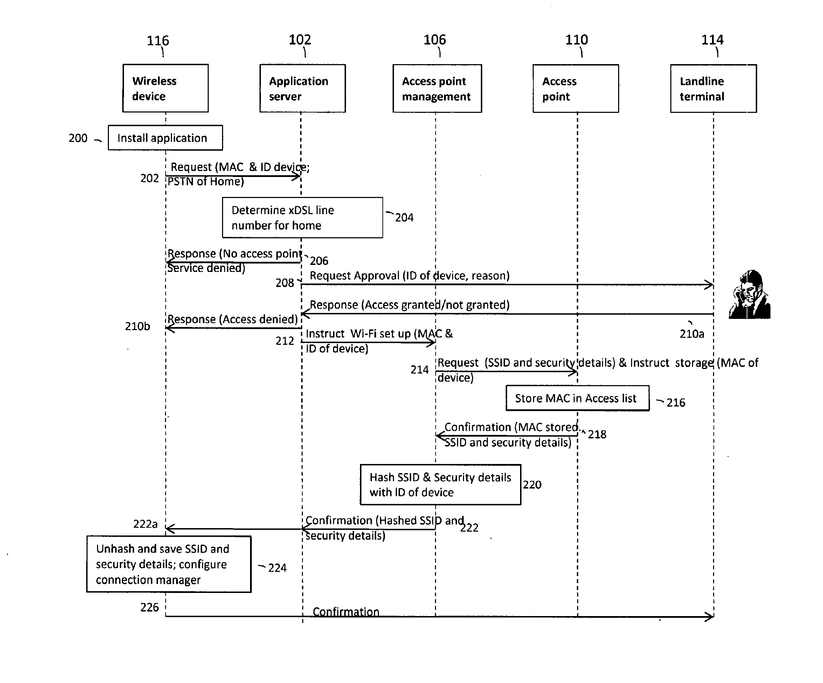

The different steps for the Wi-Fi set up will now be described in relation to figure 2.

In step 200, the user installs the Wi-Fi set up application.

In step 202, a user that wishes to use a specific wireless home network invokes the installed Wi-Fi set up application on the wireless device, and enters the landline telephone number of the customer premises 108a in which the wireless network is located. The landline number could be retrieved from the list of contacts stored in the wireless device. The application using the inbuilt programmatic access dials a derived services number to connect to the application server 102 to initiate Wi-Fi set up. When the wireless device is connected to the server it submits the landline telephone number to the derived service using DTMF signalling. Submitted with the request is also the wireless device's MAC address and telephone number. The MAC address and telephone can be provided by the set up application on the wireless device.

In step 204, upon receiving the landline telephone number, the derived service of the application server 102 performs a lookup on the list of telephone numbers stored in the store 104. The lookup returns the xDSL identifier of an access point, which corresponds to the telephone number provided.

In step 206, if a corresponding xDSL identifier cannot be found, a message is sent to the wireless device indicating that the service is denied or that an access point cannot be found.

In step 208, if a corresponding xDSL identifier for the provided landline number is found, the application server 102 dials the landline number. Assuming the home owner answers the call (on telephone 114), the derived service will ask him/her, using a recorded voice message, if he/she wants to give access to his/her home network to the identified wireless device. In particular, the wireless device is identified by the telephone number of the device provided in step 202. However, as will be discussed below, there are alternative ways of identifying the wireless device or requesting user.

The home owner may respond by DTMF using the keypad. For example, the home owner may allow for access for limited periods by pressing 1, or indefinite access by pressing 2, or denying access by pressing 3.

In step 210a, the response is then sent back to the IVR server using DTMF.

In step 210b, if access is denied, the application server 102 sends a service denial message to the wireless device.

In step 212, if the home owner has authorised access, the application server 102 forwards the xDSL identifier (obtained in step 204) and the wireless device's MAC address and telephone number (obtained in step 202) to the access point management server 106, with instructions to store the MAC address in access list of the access point 110 and for the access point 110 to send back its security details.

In step 214, upon receiving these instructions, the access point management server 106 contacts the access point 110 identified by the xDSL number, and submits the instructions to store the MAC address and to provide security details.

In step 216, upon receiving the instructions, the access point 110 stores the MAC address in its access list.

In step 218, the access point 110 confirms that the MAC address is stored, and responds by submitting its SSID and security details.

In step 220, the access point management server 106 hashes the received SSID and security details with the wireless device telephone number, and in step 222 sends the hashed parameters back to the application server 102.

In step 222a, the application server 102 converts the hashed data block to DTMF signals and forwards the signals to the wireless device.

In step 224, the Wi-Fi set up application in the wireless device first unhashes the received data block using its own telephone number. The resulting SSID and security details are then provided to the wireless device's wireless connection manager. These security details, which might include a WEP encryption key for example, can then be used to configure access to the access point identified by the SSID provided.

Preferably, in step 226, the set up application on the wireless device confirms receipt of the security details to the home owner via the PSTN connection.

The instruction in steps 214 and 216 to store the MAC address of the device in the access list in the access point 110 may be omitted, and thus no confirmation is requested in step 218 either. However, use of the MAC address allows for access to be granted for a limited time, after which the MAC address can be removed from the access list. After this specified time has expired the access point management server 106 will instruct the access point 110 to remove the MAC address for the wireless device from its access list and hence, even though the user still has the security details for the access point, he/she would still not be able to connect to the access point 110.

A further feature of personalisation is ability for the user to tag the Wi-Fi set up request in step 202 with a brief audio message that can be forwarded via the application server 102 to the access point home owner. This is for example very useful if the person requesting the Wi-Fi set up is a guest that will visit the home in the near future and would like to use the home's wireless network while there. The guest could specify when and for how long he will visit the home and the homeowner would thus be given the opportunity to grant access only for this limited time.

Further, it is possible to use the application server 106, and the IVR functionality, for requesting W-Fi set up for a laptop 118. The laptop 118 would however have a different application installed, which uses the microphone/loudspeaker of the laptop 118 acoustically coupled to a domestic phone. Since the laptop is not associated with a telephone number the identifier of the laptop would be the system name for the laptop or the like, and it would be this system name that would be used for hashing, or encrypting, the SSID and security details. All other steps would be the same as described above for the general wireless device above.

A second embodiment where the application server 102 incorporates web server functionality will now be described, also with reference to figure 2. In this embodiment a web based approach is taken instead of a voice base approach.

in order to request the Wi-Fi set up the **wireless** device opens a web page, for example using a 3G mobile Internet connection, for connecting to the Wi-Fi set up service. The web page is provided by the application server 102.

In step 202, the user logs onto the web page. Upon accessing the web page, an applet is installed on the wireless device or operated through the web browser. Using the applet, the user submits the landline telephone number of the customer premises 108a in which the wireless network is located. The user may also submit a reason for why he wishes to connect to the wireless network. The wireless device's MAC address and telephone number are also automatically submitted with the request by the applet.

Steps 204 to 222 that follow are the same as in embodiment described above. However, a text-to-speech engine 314 (see figure 3) in the application server 102 transforms the user's reason from text to speech. The resulting speech is sent to the home owner in an alternative step 208.

In an alternative step 222a, after the application server 102 has received the hashed SSID and security details from the access point management server 106, the application server 102 passes the hashed details back to the applet in the wireless device.

In yet another arrangement, if it is the home owner himself who wants to set up a new laptop 118 or PC for example, for wireless access to the access point 110, the home owner can connect the wireless device directly to the access point using a wired connection, such as an Ethernet connection. Then, the user can gain access to the internet and follow the above steps whereby an applet is downloaded and used to set-up a Wi-Fi connection.

If a wireless device which has previously been granted access to the access point 110 for a defined time window requests access again, the application server 102 only needs to instruct the access point 110 to store the MAC address of the wireless device in the access list. It does not need to request the security details again since the configuration manager of the wireless device already has these details.

Any failure up to the point of confirmation in step 222 will result in access not being set up, and may involve rolling back to an earlier set up. If so, the set-up application or applet can try again at predetermined intervals until the set up is confirmed.

If for example the access point owner has granted the set up request but the wireless device loses connection before it has received the SSID and security details in step 222a, the application server 102 would determine the device has been granted access by the access point 110, and in resend the confirmation step 222a forwarding the security details without needing to call the home owner again.

The above embodiments are to be understood as illustrative examples of the invention. Further embodiments of the invention are envisaged.

For example, other wireless devices than smartphones and laptops can benefit from the invention. Devices such as mp3 players are becoming more advanced and are often converged with phones. Many high end devices have audio microphone and Wi-Fi connectivity, so these devices could also be configured for Wi-Fi access using the invention.

Instead of having either an interactive voice response (IVR) functionality or web server functionality at the application server 106, the application server 106 could be split into separate IVR and web services so that a user could select which interface to use for the Wi-Fi set up request.

## Claims

1. A method for automatically configuring wireless access between a wireless device and an access point, said method comprising:
receiving an access request at an application server, said access request comprising an identifier associated with the wireless device and a telephone number associated with a location of the access point;
identifying from said telephone number a corresponding connection identifier associated with the access point;
sending a request from the application server to the telephone number requesting permission for said wireless device to access said access point; and if access is granted,
requesting and receiving access parameters from the access point identified by the connection identifier; and
forwarding said access parameters to the wireless device for configuring wireless access to the access point.

2. A method according to claim 1 further comprising the application server receiving a MAC address of the wireless device, and forwarding said MAC address to the access point for storage in an access list.

3. A method according to claim 2 wherein access to the access point is granted only for a limited time, after which the MAC address of the wireless device is deleted from the access list.

4. A method according to claims 1, 2 or 3 wherein the access request further comprises a reason for why the wireless device is requesting access parameters, and wherein the sending of the request from the application server to the telephone number further comprises said reason.

5. A method according to any of the preceding claims further comprising encrypting the access parameters with the identifier associated with the wireless device before forwarding the access parameters to the wireless device.

6. A method according to any of the preceding claims wherein the identifier associated with the wireless device is a telephone number or name of the wireless device.

7. A method according to any of the preceding claims wherein the application server comprises an interactive voice response service.

8. A method according to claims 1 to 7 wherein the application server comprises a web server service.

9. A method according to any of the preceding claims wherein the access parameters comprises a SSID (service set identifier) and security details for the access point.

10. A method according to claim 9 wherein the security details comprises a Wired Equivalent Privacy key or a Wi-Fi Protected Access key.

11. An application server for configuring wireless access between a wireless device and an access point, said application server comprising :
a request receiving module for receiving an access request from a wireless device, said access request comprising an identifier associated with the wireless device and a telephone number associated with a location of the access point;
an access point finding module for identifying from said telephone number a corresponding connection identifier associated with the access point;
a communications module for sending a request to the telephone number requesting permission for said wireless device to access said access point;
a requesting module for requesting and receiving access parameters from the access point identified by the connection identifier; and
a forwarding module for forwarding said access parameters to the wireless device for configuring wireless access to the access point.

12. A computer program or suite of computer programs executable by a processor to cause the processor to perform the method of any one of claims 1 to 10.

13. A non-transitory computer readable storage medium storing a computer program or a suite of computer programs according to claim 12.
